# EUROPÄISCHE PATENTANMELDUNG

(11) **EP 0 915 005 A2**
(43) Veröffentlichungstag der Anmeldung: **12.05.1999**
(21) Anmeldenummer: 98119754.4
(22) Anmeldetag: 22.10.1998
(51) Int. Cl.: B62D 9/00

(54) **Fahrzeug mit einer Achsschenkellenkung für zwei zu einer Achse gehörige Räder**

(30) Priorität: 07.11.1997 DE 19749195
(71) Anmelder: Franz Kleine Agrartechnik GmbH, D-33154 Salzkotten (DE)
(72) Erfinder: Schulte, Reinhold, 33106 Paderborn-Elsen (DE)
(74) Vertreter: Patentanwälte Rehberg + Hüppe

(57) **Zusammenfassung**

Ein Fahrzeug weist eine Achsschenkellenkung (15) für zwei zu einer Achse (9) gehörige Räder (8) mit einem gegenüber einem Fahrzeugrahmen (20) verschwenkbaren Achsschenkel (19) für jedes der beiden Räder (8) auf. Jeder der beiden Achsschenkel (19) ist über ein Koppelstück (21) an dem Fahrzzeugrahmen (20) gelagert, wobei das Koppelstück (21) mit dem Achsschenkel (19) um eine erste Schwenkachse (10) gegenüber dem Fahrzeugrahmen (20) verschwenkbar ist, wobei der Achsschenkel (19) gegenüber dem Koppelstück (21) und dem Fahrzeugrahmen (20) um eine zweite Schwenkachse (11) verschwenkbar ist, wobei die beiden etwa vertikal verlaufenden Schwenkachsen (11) in der Fahrtrichtung des Fahrzeugs untereinander beabstandet sind und wobei das Koppelstück (21) und der Achsschenkel (19) in einer Geradeausstellung der Achsschenkellenkung (15) nebeneinander an dem Fahrzeugrahmen (20) anliegen.

## Beschreibung

Die Erfindung bezieht sich auf ein Fahrzeug mit einer Achsschenkellenkung für zwei zu einer Achse gehörige Räder, die einen gegenüber einem Fahrzeugrahmen verschwenkbaren Achsschenkel für jedes der beiden Räder aufweist.

Insbesondere bezieht sich die Erfindung auf landwirtschaftliche Fahrzeuge und hier insbesondere auf selbstfahrende Erntemaschinen bei denen geerntete Wurzelfrüchte zwischen den Rädern einer mit der Achsschenkellenkung versehenen Vorderachse hindurchtreten. Konkret kann die selbstfahrende Erntemaschine eine Rübenerntemaschine sein, bei der Rüben mit Siebsternen zwischen den Rädern der Vorderachse hindurch gefördert werden.

Eine herkömmliche Achsschenkellenkung, bei der die Achsschenkel um Schwenkachsen gegenüber dem Fahrzeugrahmen verschwenkbar sind, welche etwa vertikal durch die Achse verlaufen, zu der die entsprechenden Räder gehören, ist mit dem Nachteil verbunden, daß der Freiraum zwischen den Rädern beim Betätigen der Achsschenkellenkung stark verkleinert wird. Mit dem Freiraum zwischen den Rädern ist dabei der parallel zur Längsmittelebene des jeweiligen Fahrzeugs verlaufende Raum gemeint, der durch den jeweils auf die Längsmittelebene des Fahrzeugs hin geschwenkten Teil der Räder verschmälert wird. Die Verschmälerung ist bei Fahrzeugen mit großen Raddurchmessern besonders hoch. Hierdurch muß bei selbstfahrenden Erntemaschinen die Breite der das Erntegut zwischen den Rädern der Vorderachse hindurchtransportierenden Vorrichtungen klein gehalten werden oder der maximale Einschlagwinkel der Achsschenkellenkung muß klein bleiben. Beides ist nachteilig. Schmale Transportvorrichtungen sind beispielsweise zum reinigenden Transport von Wurzelfrüchten weniger gut geeignet als beispielsweise breite Siebsterne. Ein geringer maximaler Einschlagwinkel der Achsschenkel schränkt die durch die Achsschenkellenkung gegebene Manövrierfähigkeit des Fahrzeugs ein.

Ein Fahrzeug mit einer Achsschenkellenkung der eingangs beschriebenen Art für eine Vorderachse ist aus der WO 89/07545 bekannt. Hier sind die beiden Achsschenkel nicht direkt an dem Fahrzeugrahmen gelagert sondern an einem gemeinsamen Achskörper. Der Achskörper ist um eine in Fahrtrichtung hinten liegende vertikale Achse gegenüber dem Fahrzeugrahmen verschwenkbar. Unter Berücksichtigung, daß der Lenkwinkel des kurvenäußeren Rads, bedingt durch die unterschiedlichen Spurkreise der Räder, kleiner ist als der Lenkwinkel des kurveninneren Rads kann durch eine abgestimmte Verlagerung des Achskörpers gegenüber dem Fahrzeugrahmen der Einschlagwinkel vor einem Anschlagen der Räder vergrößert werden. Darüberhinaus verkleinert sich der Wendekreis des bekannten Fahrzeugs auch dadurch, daß die schwenkbare Lagerung des Achskörpers wie ein Knickgelenk für das Fahrzeugs wirkt. Die schwenkbare Lagerung des Achskörpers geht jedoch zu Lasten der Stabilität des bekannten Fahrzeugs. Sie ist zudem insbesondere dann schwierig zu realisieren, wenn bei vielen Erntemaschinen zwischen den Rädern Fördereinrichtungen für das Erntegut angeordnet sind, die sich bis in den Bereich der potentiellen vertikalen Schwenkachse für den Achskörper erstrecken.

Der Erfindung liegt daher die Aufgabe zugrunde, ein einfacher aufgebautes Fahrzeug der eingangs beschriebenen Art mit einer Achsschenkellenkung aufzuzeigen, bei dem der Freiraum zwischen den Rädern der gelenkten Achse auch bei großen Rädern und großen Einschlagwinkeln vergleichsweise groß bleibt.

Erfindungsgemäß wird diese Aufgabe bei einem Fahrzeug der eingangs beschriebenen Art dadurch gelöst, daß jeder der beiden Achsschenkel über ein Koppelstück an dem Fahrzeugrahmen gelagert ist, wobei das Koppelstück mit dem Achsschenkel um eine erste Schwenkachse gegenüber dem Fahrzeugrahmen verschwenkbar ist, wobei der Achsschenkel gegenüber dem Koppelstück und dem Fahrzeugrahmen um eine zweite Schwenkachse verschwenkbar ist, wobei die beiden etwa vertikal verlaufenden Schwenkachsen in der Fahrtrichtung des Fahrzeugs untereinander beabstandet sind und wobei das Koppelstück und der Achsschenkel in einer Geradeausstellung der Achsschenkellenkung nebeneinander an dem Fahrzeugrahmen anliegen. Bei dem neuen Fahrzeug ist jeder Achsschenkel effektiv um zwei verschiedene Schwenkachsen gegenüber dem Fahrzeugrahmen verschwenkbar - gemeinsam mit dem Koppelstück um die erste Schwenkachse und gegenüber dem Fahrzeugrahmen und dem Koppelstück um die zweite Schwenkachse. So ist es möglich, für die jeweilige Lenkbewegung immer die Schwenkachse auszuwählen, die den minimalen Abstand zwischen dem jeweiligen Rad und der Längsmittelebene des Fahrzeugs am wenigsten verringert. Dies ist immer die Schwenkachse, die dem bei der jeweiligen Lenkbewegung nach Innen wandernden Bereich des jeweiligen Rads näher liegt. Im Ergebnis ist bei einer Lenkbewegung nach rechts ein anderes Paar von Schwenkachsen bei den zwei gelenkten Rädern einer Achse aktiv als bei einer Lenkbewegung nach links. Bei einer Lenkbewegung nach rechts ist bei dem rechten Rad die hintere der beiden Schwenkachsen und bei dem linken Rad die vordere der beiden Schwenkachsen aktiv. Bei einer Lenkbewegung nach links verhält es sich umgekehrt.

Obwohl in Anpassung an besondere Gegebenheiten des Einzelfalls eine andere Anordnung möglich ist, ist die eine der beiden Schwenkachsen jedes Achsschenkels jeweils vor der Achse, zu der die beiden Räder gehören, und die andere Schwenkachse jeweils hinter der Achse angeordnet. Der absolut gesehen maximale Freiraum zwischen den beiden Rädern verbleibt im Mittel genau dann, wenn die Abstände der beiden Schwenkachsen zu der Achse, zu der die beiden Räder gehören, gleich ist.

Für die Stabilität des neuen Fahrzeugs, d. h. dafür, daß es während einer Lenkbewegung immer einen definierten Zustand aufweist, ist es wichtig, daß immer nur eine der beiden Schwenkachsen jedes Achsschenkels aktiviert wird. Dies kann bereits dadurch erreicht werden, daß das Eigengewicht des Fahrzeugs genutzt wird, um sowohl den jeweiligen Achsschenkel auf das Koppelstück hin als auch das jeweilige Koppelstück auf den Fahrzeugrahmen hin zu beaufschlagen. Diese Beaufschlagung wird erreicht, wenn die beiden Schwenkachsen von unten nach oben gesehen voneinander und von einer zwischen ihnen angeordneten Vertikalen weg geneigt sind. Das Verschwenken des Achsschenkels um eine der beiden Schwenkachsen führt dann immer zu einer Anhebung des Fahrzeugrahmens gegenüber dem Achsschenkel. Die diesem entgegenwirkende Schwerkraft ist darauf bedacht, den Achsschenkel in die Geradeausstellung der Achsschenkellenkung zurückzuführen. Dies gilt bezüglich jeder der beiden Schwenkachsen, so daß bei selektiver Betätigung einer der beiden Schwenkachsen die andere Schwenkachse auch ohne zusätzliche Sicherungsmaßnahmen inaktiv bleibt.

Vorzugsweise sind die Schwenkachsen in einer parallel zur Längsmittelebene des Fahrzeugs verlaufenden Ebene angeordnet, wobei eine Vertikale die Winkelhalbierende zwischen den Schwenkachsen bildet.

Ein geeigneter Winkel zwischen jeder Schwenkachse und der Vertikalen beträgt zwischen 1 und 5 ° . Der bevorzugte Winkelbereich liegt bei 3 °, d. h. zwischen 2 und 4 °.

Zur Betätigung der Achsschenkellenkung, d. h. zur selektiven Verschwenkung des Achsschenkels um jeweils eine der beiden Schwenkachsen kann für jeden Achsschenkel ein um eine etwa senkrecht verlaufende Lenkachse gegenüber dem Fahrzeugrahmen verschwenkbarer, zweiarmiger Lenkkörper vorgesehen sein, wobei der eine Arm des Lenkkörpers und das jeweilige Koppelstück durch eine beidseitig angelenkte erste ausziehbare Schubstange und der andere Arm des Lenkkörpers und der Achsschenkel durch eine beidendseitig angelenkte zweite ausziehbare Schubstange miteinander verbunden sind. Die erste ausziehbare Schubstange sollte dabei mit Abstand zu der ersten Schwenkachse und nahe der zweiten Schwenkachse an dem Koppelstück und die zweite ausziehbare Schubstange mit Abstand zu der zweiten Schwenkachse und nahe der ersten Schwenkachse an dem Achsschenkel angreifen. Bei einem Verschwenken des Lenkkörpers um die Lenkachse wird jeweils eine Schubstange ausgezogen. Diese Schubstange führt zu keiner Schwenkbewegung des Achsschenkels. Aktiv ist die Schubstange, mit der das Koppelstück bzw. direkt der Achsschenkel beaufschlagt wird. Diese Schubstange verschwenkt den Achsschenkel um die erste bzw. zweite Schwenkachse. Ausziehbare Schubstangen im vorgenannten Sinne können einfacher Teleskopanordnungen sein, wobei keine Kräfte zwischen den gegeneinander teleskopierbaren Teilen vorliegen. Vorzugsweise sind die Schubstangen aber nur gegen eine Federkraft ausziehbar. Diese Federkraft dient dann dazu, die Schwenkachse, die gerade nicht betätigt werden soll, zu inaktivieren, indem das um diese Schwenkachse direkt verschwenkbare Bauteil an den Fahrzeugrahmen herangezogen wird. Die Federkraft, gegen die die Schubstangen vorzugsweise ausziehbar sind, kann durch eine Spiralfeder oder auch hydraulisch aufgebracht werden.

In der bevorzugten Ausführungsform des neuen Fahrzeugs ist ein gemeinsamer Lenkkörper in der Fahrzeugmitte für beide Achsschenkel vorgesehen. Von jedem Arm des gemeinsamen Lenkkörpers führt dann jeweils eine Schubstange zu dem Koppelstück bzw. direkt zu dem Achsschenkel.

Grundsätzlich ist denkbar, den gemeinsamen Lenkkörper direkt oder über eine Übersetzung mit einem Lenkrad für das Fahrzeug zu verbinden. In der bevorzugten Ausführungsform des Fahrzeugs wird der Lenkkörper jedoch durch zwei einseitig wirkende und identisch ausgebildete Hydraulikzylinder betätigt, die auf einer Fahrzeugseite zwischen jeweils einem der beiden Arme des Lenkkörpers und dem Fahrzeugrahmen beidseitig angelenkt sind. Diese Anordnung ist besonders kompakt und sorgt für gleiche Hebel- und Kraftverhältnisse beim Lenken des Fahrzeugs nach links und nach rechts. Statt der beiden einseitig wirkenden Zylinder kann auch nur ein einziger doppelt wirkender Zylinder vorgesehen sein. Eine dritte Möglichkeit besteht in der Anordnung von zwei doppelt wirkenden Zylindern.

Die Erfindung wird im folgenden anhand eines Ausführungsbeispiels näher erläutert und beschrieben. Dabei zeigt
- Figur 1: eine Prinzipskizze eines Fahrzeugs in der Draufsicht,
- Figur 2: die auf ein gelenktes Rad des Fahrzeugs gemäß Figur 1 bezogenen Teile einer Achsschenkellenkung des Fahrzeugs in einer teilweise geschnittenen Ansicht von oben und
- Figur 3: ein Koppelstück der Achsschenkellenkung gemäß Figur 2 in einer separaten seitlichen Draufsicht.

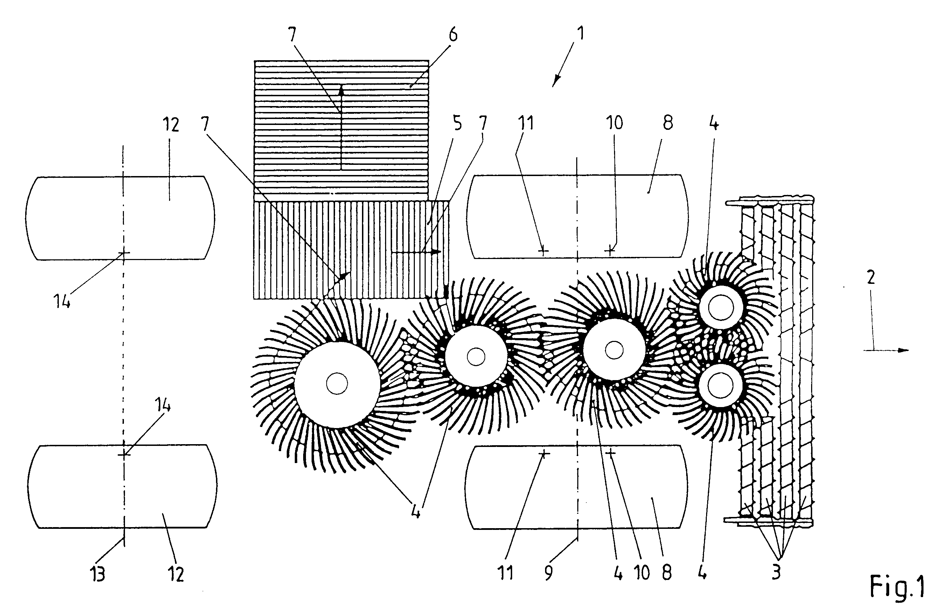

Das in Figur 1 dargestellte Fahrzeug 1 ist eine Rübenerntemaschine, wobei die mehreren parallel zu einer Arbeitsrichtung 2 der Rübenerntemaschine angeordneten Reinigungswalzen 3 vorgeschalteten Rodeeinrichtungen nicht dargestellt sind. Den Reinigungswalzen 3 sind Siebsterne 4 nachgeschaltet. An den letzten Siebstern 4 schließt sich ein siebförmiger Elevator 5 an, der die Rüben über ein Siebband 6 gereinigt an ein hier nicht dargestelltes, parallel fahrendes Transportfahrzeug abgibt. Der Weg der Rüben über die einzelnen Transport- und Reinigungsvorrichtungen 3 bis 6 ist durch Pfeile 7 angedeutet. Dieser Weg führt zwischen den Rädern 8 einer Vorderachse 9 des Fahrzeugs 1 hindurch. Konkret sind zwischen den Rädern 8 Siebsterne 4 angeordnet. Diese Siebsterne 4 beeinträchtigen die Lenkung des Fahrzeugs 1 über die Räder 8, da der mögliche Einschlagwinkel der Räder 8 durch die Siebsterne 4 stark eingeschränkt ist. Um dennoch einen nennenswerten Einschlagwinkel in beide Lenkrichtungen nach rechts und links realisieren zu können, ist für die Räder 8 der Vorderachse 9 eine Achsschenkellenkung vorgesehen, bei der die Achsschenkel bzw. die Räder je nach Lenkrichtung um jeweils zwei verschiedene Schwenkachsen 10 und 11 verschwenkt werden. Es wird immer die Schwenkachse 10 bzw. 11 genutzt, um die verschwenkt das jeweilige Rad 8 sich möglichst wenig an die zwischen den Rädern 8 befindlichen Siebsterne 4 annähert. Allerdings wird während einer Lenkbewegung nach rechts oder links jeweils nur eine Schwenkachse 10 bzw. 11 je Rad 8 genutzt. Zusätzlich zu der Achsschenkellenkung für die Räder 8 der Vorderachse 9 ist auch eine Achsschenkellenkung für die Räder 12 einer Hinterachse 13 des Fahrzeugs 1 vorgesehen. Diese Achsschenkellenkung weist jedoch nur eine Schwenkachse 14 je Rad auf, die etwa vertikal die Hinterachse 13 kreuzt.

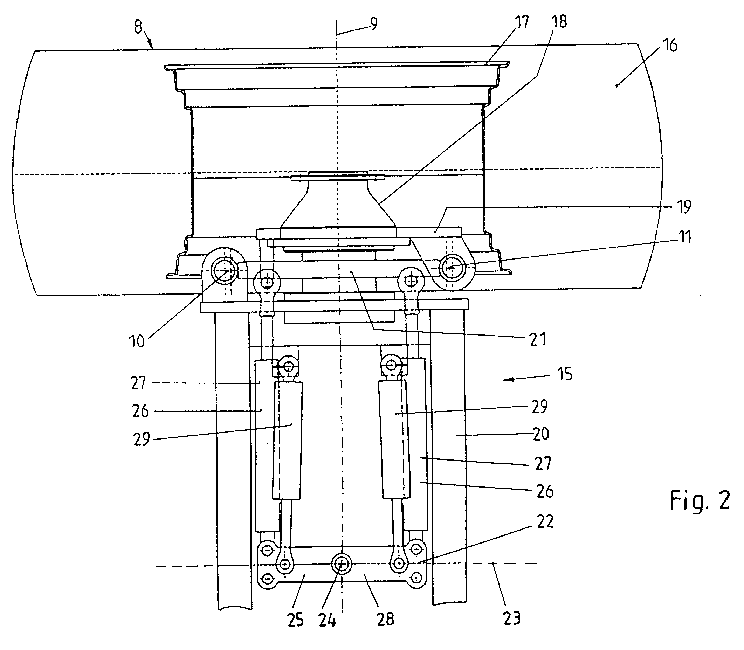

In Figur 2 ist die Achsschenkellenkung 15 für ein Rad 8 der Vorderachse 9 des Fahrzeugs 1 im Detail wiedergegeben. Das Rad 8 weist einen Reifen 16 auf, der auf eine Felge 17 aufgezogen ist. Die Felge 17 ist an einer Radnabe 18 befestigt. Die Radnabe 18 ist starr an einem Achsschenkel 19 gelagert. Der Achsschenkel 19 ist jedoch nicht direkt an einen Fahrzeugrahmen 20 des Fahrzeugs 1 befestigt, vielmehr ist hier ein Koppelstück 21 zwischengeordnet. Das Koppelstück 21 ist um die hier auch als erste Schwenkachse bezeichnete Schwenkachse 10 gegenüber dem Fahrzeugrahmen 20 verschwenkbar, während der Achsschenkel 19 um die auch als zweite Schwenkachse bezeichnete Schwenkachse 11 gegenüber dem Koppelstück 21 verschwenkbar ist. In der gezeigten Geradeausstellung der Achsschenkellenkung 15 gemäß Figur 2 liegt von Außen nach Innen der Achsschenkel 19 an dem Koppelstück 21 und das Koppelstück 21 an dem Fahrzeugrahmen 20 an. Ein Lenkkörper 22 der Achsschenkellenkung 15 ist um eine vertikal in der Längsmittelebene 23 des Körpers verlaufende Lenkachse 24 verschwenkbar gelagert. Der Lenkkörper 22 ist zweiarmig ausgebildet. Zwischen seinem vorderen Arm 25 und dem Achsschenkel 19 ist eine Schubstange 26 angeordnet. Bei der Schubstange 26 handelt es sich um einen beidseitig angelenkten Hydraulikzylinder 27, der von einem hier nicht dargestellten Druckreservoir elastisch in seine zusammengefahrene Stellung beaufschlagt wird. Die Schubstange 26 ist damit gegen das Hydraulikreservoir ausziehbar, aber nicht weiter zusammenfahrbar. Wenn der vordere Arm 25 des Lenkkörpers 22 um die Lenkachse 24 auf den Achsschenkel 19 hin verschwenkt wird, wird der Achsschenkel 19 daher um die Lenkachse 11 verschwenkt. Eine weitere als Hydraulikzylinder 27 ausgebildete Schubstange 26 ist zwischen dem hinteren Arm 28 des Lenkkörpers 22 und dem Koppelstück 21 angeordnet, d. h. beidendseitig angelenkt. Bei einem Verschwenken des hinteren Arms 28 des Lenkkörpers 22 auf das Koppelstück 21 hin wird der Achsschenkel 19 mit dem Koppelstück 21 um die Schwenkachse 10 verschwenkt. Dabei wird die Schubstange 26 zwischen dem vorderen Arm 25 des Lenkkörpers 22 und dem Achsschenkel 19 auseinandergezogen. Die dabei auftretende elastische Gegenkraft zieht den Achsschenkel 19 an das Koppelstück 21 heran, so daß die Schwenkachse 11 inaktiv bleibt. Entsprechend inaktiviert die ausgezogenen Schubstange 26 zwischen dem hinteren Arm 28 des Lenkkörpers 22 und dem Koppelstück 21 die erste Schwenkachse 10 beim Betätigen der zweiten Schwenkachse 11 mit der anderen Schubstange 26. Soweit wie bis hierher beschrieben, ist die Achsschenkellenkung 15 für die beiden Räder 8 der Vorderachse 9 spiegelsymmetrisch zu der Längsmittelebene 23 des Fahrzeugs ausgebildet. Nicht spiegelsymmetrisch sind zwei einseitig wirkende Hydraulikzylinder 29 zum Betätigen des Lenkkörpers 22 angeordnet. Die Hydraulikzylinder 29 sind nur auf einer Seite der Längsmittelebene 23 endseitig an jeweils einen Arm 25 bzw. 28 des Lenkkörpers 22 und den Fahrzeugrahmen 20 angelenkt. Beim Betätigen jedes Hydraulikzylinders 29 wird der angelenkte Arm 25 bzw. 28 des Lenkkörpers 22 weggedrückt. So ergibt die Betätigung des an dem vorderen Arm 25 des Lenkkörpers 22 angreifenden Hydraulikzylinders 29 ein Verschwenken des Rads 8 entgegen dem Uhrzeigersinn um die Schwenkachse 10, während ein Betätigen des an dem hinteren Arm 28 angreifenden Hydraulikzylinders 29 ein Verschwenken des Rads 8 im Uhrzeigersinn um die Schwenkachse 11 ergibt. Bei beiden Lenkvorgängen treten bezogen auf beide Räder gleiche Kraftverhältnisse auf. Die beiden Hydraulikzylinder 29 sind gleichzeitig in besonders kompakter Anordnung bei der Achsschenkellenkung 15 vorgesehen.

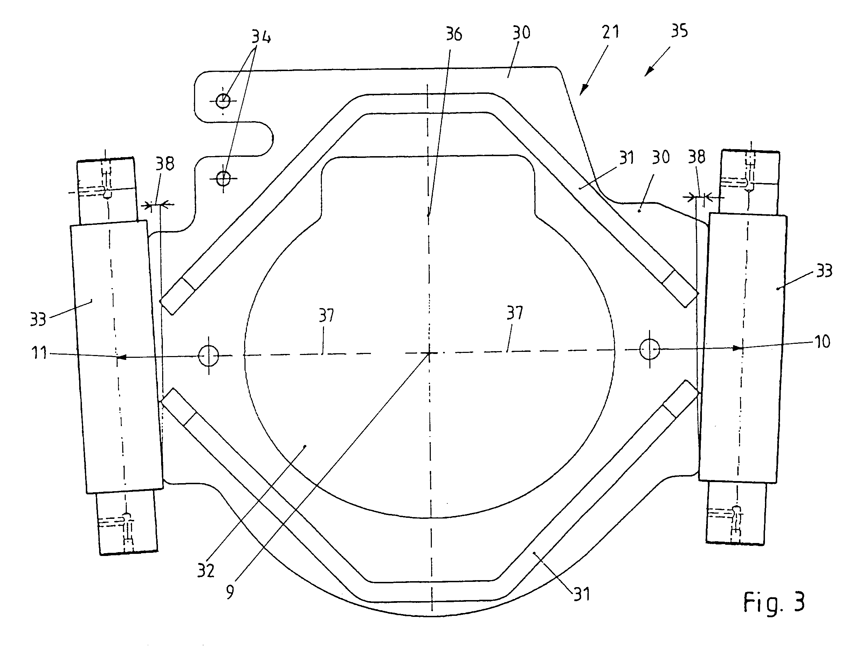

Neben der elastischen Gegenkraft, die gegen ein Auseinanderziehen der Schubstangen 26 wirkt, ist eine zusätzliche Maßnahme vorgesehen, die die Inaktivierung der jeweils nicht betätigten Schwenkachse 10 bzw. 11 unterstützt. Hierbei handelt es sich um eine in Figur 2 nur angedeutete Neigung der Schwenkachsen 10 und 11. Genauer ist diese Neigung aus Figur 3 zu entnehmen, die eine Draufsicht auf das Koppelstück 21 aus einer Blickrichtung von außen auf das Rad 8 gemäß Figur 2 wiedergibt. Das Koppelstück 21 besteht aus einer Stahlplatte 30 mit aufgeschweißten Versteifungsstreben 31 und einer mittigen Durchbrechung 32 sowie zwei seitlich angebrachten Gelenkbolzen 33. Die Gelenkbolzen 33 definieren die Schwenkachsen 10 und 11. Der Angriff der mit dem hinteren Arm 28 verbundenen Schubstange 26 an dem Koppelstück 21 erfolgt über ein hier nicht dargestelltes Zwischenstück, das über Bohrungen 34 in der Stahlplatte 30 befestigt ist. Für den freien Angriff der anderen Schubstange 26 an dem Achsschenkel 19 gemäß Figur 2 weist die Stahlplatte 30 eine Ausnehmung 35 auf. Die Schwenkachsen 10 und 11 laufen von unten nach oben gesehen auseinander, wobei eine Vertikale 36, die durch die Vorderachse 9 verläuft die Winkelhalbierende zwischen den Schwenkachsen 10 und 11 bildet und einen gleichen Abstand 37 zu den beiden Schwenkachsen 10 und 11 aufweist. Ein Winkel 38 zwischen den Schwenkachsen 10 und 11 und der Vertikalen beträgt hier 3°.

Dieser Winkel sorgt dafür, daß bei einem Verschwenken des Achsschenkels um eine der beiden Schwenkachsen 10 und 11 der Fahrzeugrahmen 20 gemäß Figur 2 gegenüber dem Rad 8 in vertikaler Richtung angehoben wird. Umgekehrt sorgt die Schwerkraft des Fahrzeugrahmens und aller daran abgestützter Bauteile des Fahrzeugs dafür, daß der Achsschenkel in die Geradeausstellung gemäß Figur 2 zurückkehrt. Diese Ausnutzung der Schwerkraft des Fahrzeugs für ein Rückstellmoment der Achsschenkellenkung 15 macht bereits für sich allein eine selektive Aktivierung der einzelnen Schwenkachsen 10 und 11 der Achsschenkellenkung 15 möglich.

### BEZUGSZEICHENLISTE

- 1: - Fahrzeug
- 2: - Arbeitsrichtung
- 3: - Reinigungswalzen
- 4: - Siebstern
- 5: - Elevator
- 6: - Siebband
- 7: - Pfeil
- 8: - Rad
- 9: - Vorderachse
- 10: - Schwenkachse
- 11: - Schwenkachse
- 12: - Rad
- 13: - Hinterachse
- 14: - Schwenkachse
- 15: - Achsschenkellenkung
- 16: - Reifen
- 17: - Felge
- 18: - Radnabe
- 19: - Achsschenkel
- 20: - Fahrzeugrahmen
- 21: - Koppelstück
- 22: - Lenkkörper
- 23: - Längsmittelebene
- 24: - Lenkachse
- 25: - Arm
- 26: - Schubstange
- 27: - Hydraulikzylinder
- 28: - Arm
- 29: - Hydraulikzylinder
- 30: - Stahlplatte
- 31: - Versteifungsstrebe
- 32: - Durchbrechung
- 33: - Gelenkbolzen
- 34: - Bohrung
- 35: - Ausnehmung
- 36: - Vertikale
- 37: - Abstand
- 38: - Winkel

## Patentansprüche

1. Fahrzeug mit einer Achsschenkellenkung für zwei zu einer Achse gehörige Räder, die einen gegenüber einem Fahrzeugrahmen verschwenkbaren Achsschenkel für jedes der beiden Räder aufweist, **dadurch gekennzeichnet**, daß jeder der beiden Achsschenkel (19) über ein Koppelstück (21) an dem Fahrzeugrahmen (20) gelagert ist, wobei das Koppelstück (21) mit dem Achsschenkel (19) um eine erste Schwenkachse (10) gegenüber dem Fahrzeugrahmen (20) verschwenkbar ist, wobei der Achsschenkel (19) gegenüber dem Koppelstück (21) und dem Fahrzeugrahmen (20) um eine zweite Schwenkachse (11) verschwenkbar ist, wobei die beiden etwa vertikal verlaufenden Schwenkachsen (10 und 11) in der Fahrtrichtung des Fahrzeugs (1) untereinander beabstandet sind und wobei das Koppelstück (21) und der Achsschenkel (19) in einer Geradeausstellung der Achsschenkellenkung nebeneinander an dem Fahrzeugrahmen (20) anliegen.

2. Fahrzeug nach Anspruch 1, **dadurch gekennzeichnet**, daß die eine der beiden Schwenkachsen (10 bzw. 11) jeweils vor der Achse (Vorderachse 9), zu der die beiden Räder (8) gehören, und die andere Schwenkachse (11 bzw. 10) jeweils hinter der Achse angeordnet ist.

3. Fahrzeug nach Anspruch 2, **dadurch gekennzeichnet**, daß die beiden Schwenkachsen (10 und 11) denselben Abstand zu der Achse (Vorderachse 9), zu der die beiden Räder (8) gehören, aufweisen.

4. Fahrzeug nach Anspruch 1, 2 oder 3, **dadurch gekennzeichnet**, daß die beiden Schwenkachsen (10 und 11) von unten nach oben gesehen voneinander und von einer zwischen ihnen angeordneten Vertikalen (36) weg geneigt sind.

5. Fahrzeug nach Anspruch 4, **dadurch gekennzeichnet**, daß die Schwenkachsen (10 und 11) in einer parallel zur Längsmittelebene (23) des Fahrzeugs (1) verlaufenden Ebene angeordnet sind, wobei eine Vertikale (36) die Winkelhalbierende zwischen den Schwenkachsen (10 und 11) bildet.

6. Fahrzeug nach Anspruch 4 oder 5, **dadurch gekennzeichnet**, daß der Winkel (38) zwischen jeder Schwenkachse (10 bzw. 11) und der Vertikalen (36) 1° bis 5°, vorzugsweise 2° bis 4°, beträgt.

7. Fahrzeug nach einem der Ansprüche 1 bis 6, **dadurch gekennzeichnet**, daß für jeden Achsschenkel (19) ein um eine etwa senkrecht verlaufende Lenkachse (24) gegenüber dem Fahrzeugrahmen (20) verschwenkbarer, zweiarmiger Lenkkörper (22) vorgesehen ist, wobei der eine Arm (28) des Lenkkörpers (22) und das jeweilige Koppelstück (21) durch eine beidseitig angelenkte erste ausziehbare Schubstange (26) und der andere Arm (25) des Lenkkörpers (22) und der Achsschenkel (19) durch eine beidseitig angelenkte zweite ausziehbare Schubstange (26) miteinander verbunden sind, wobei die erste ausziehbare Schubstange (26) mit Abstand zu der ersten Schwenkachse (10) und nahe der zweiten Schwenkachse (11) an dem Koppelstück (21) und die zweite ausziehbare Schubstange (26) mit Abstand zu der zweiten Schwenkachse (11) und nahe der ersten Schwenkachse (10) an dem Achsschenkel (19) angreift.

8. Fahrzeug nach Anspruch 7, **dadurch gekennzeichnet,** daß die Schubstangen (26) gegen Federkraft ausziehbar sind.

9. Fahrzeug nach Anspruch 7 oder 8, **dadurch gekennzeichnet,** daß ein gemeinsamer Lenkkörper (22) in der Fahrzeugmitte für beide Achsschenkel (19) vorgesehen ist.

10. Fahrzeug nach Anspruch 9, **dadurch gekennzeichnet,** daß auf einer Fahrzeugseite zwischen jedem der beiden Arme (25, 28) des Lenkkörpers (22) und dem Fahrzeugrahmen (20) je ein beidseitig angelenkter einseitig wirkender Hydraulikzylinder (29) vorgesehen ist.
